# EUROPEAN PATENT APPLICATION

(11) **EP 4 818 422 A1**
(43) Date of publication of application: **07.10.2026**
(21) Application number: 26167807.2
(22) Date of filing: 25.03.2026
(51) Int. Cl.: E02F 9/26, E02F 3/14, E02F 9/28, G01N 3/56, G06N 3/02, G06Q 10/20, G06T 7/00

(54) **MONITORING SYSTEM FOR EXCAVATION EQUIPMENT**

(30) Priority: 02.04.2025 IT 202500007047
(71) Applicant: Tesmec S.p.A., 20123 Milano (IT)
(72) Inventor: MANTOAN, Cristian, 24047 TREVIGLIO (BG) (IT); URSELLA, Andrea, 24123 BERGAMO (BG) (IT); VILLA, Flavio, 24040 CALVENZANO (BG) (IT)
(74) Representative: Gatti, Enrico

(57) **Abstract**

A monitoring system for excavation equipment of earth-moving machinery comprising a detection device (12) attached to excavation equipment (18) by means of a specific structure, an acquisition and processing unit (30) configured to acquire and process data detected in real time by the detection device (12) by means of analysis algorithms based on artificial intelligence and a user interface (36) for displaying the results of the analysis in real time.

## Description

The present invention relates to a monitoring system for excavation equipment.

More in particular, the present invention refers to a monitoring system for excavation equipment of earth-moving machinery and, more in particular, for excavation machines such as trenchers and surface miners.

Excavation machines of trencher and surface miner type are widely used in the mining industry, in the construction industry and in excavation works for opening trenches, removing surface layers of earth and for the controlled fragmentation of rocks and hard materials.

Trenchers are machines provided with a chain or disc cutting member for digging trenches with variable widths and depths, according to the application, and are often used for laying pipes, electrical cables and tubes.

Surface miners are instead machines designed for the selective extraction of stone and mineral materials without the need for drilling and blasting, and operate by means of a rotating cutting drum provided with digging tools, which crush the material to facilitate its removal and transport; these machines offer the advantage of reducing the use of explosives and improving particle size uniformity of the excavated material.

The digging tools mounted on these machines are subject to progressive wear due to friction with the material to be excavated, leading to a deterioration of the performance of the machines and an increase in the operating costs.

More in particular, wear can concern the deterioration or consumption of the digging tools, the loss of these tools, the loss of the tool pockets and the loss of the fixing screws of the plates that support the tool pockets.

Different control methods have been developed to monitor the wear and condition of the tools, for example defined by visual monitoring and scheduled maintenance, i.e., periodic manual inspection of the digging tools or by the use of systems based on force and vibration sensors, which monitor changes in the cutting forces and in the vibrations to detect defects caused by wear of the tools, or are defined by the use of resistance temperature sensors to detect overheating of the tools, indicative of advanced wear.

However, all these control methods have many important drawbacks.

In fact, visual monitoring and scheduled maintenance methods do not enable real time detection of tool deterioration and require machine downtime while the control operations are being carried out.

Moreover, the frequency of the control operations is subjective and, therefore, there is the risk of defects being detected with considerable delay, resulting in increases in repair/maintenance costs; for example, a pocket damaged through the loss of a digging tooth that is not promptly detected, a damaged plate through the loss of a tool that is not promptly detected, the loss of a plate due to broken or lost fixing screws.

Further, evaluation of the condition of wear of the tools is subjective and, consequently, the tools may be replaced either too early or too late.

In addition to the above, a further drawback is represented by the fact that a record of the number of replaced tools is not always readily available, regardless of the fact that this information is very important.

Monitoring methods based on the use of force and vibration sensors have important drawbacks linked to the fact that they can be influenced by environmental variables and by the conditions of the excavated material, reducing their reliability.

Likewise, methods based on resistance temperature sensors have important drawbacks linked to the fact that they can experience delays in detection and cannot always distinguish between normal wear and accidental damage to the tools.

Other known monitoring methods are based on laser profilometry, which uses laser sensors to acquire a three-dimensional profile of the tools mounted on the machine, comparing it with the original profile to detect wear, damages or breakages.

However, notwithstanding considerable advantages in terms of detection precision, this method also has important drawbacks linked to the accumulation of debris and dust during excavation operations, which can hamper detection by the laser sensors, compromising measurement accuracy.

Further drawbacks are represented by scanning difficulty in dynamic environments as the tools are moving and subjected to strong vibrations and the laser can have difficulty in performing stable and repeatable scanning, causing detection errors.

Further drawbacks are represented by limitations in the lighting and reflectance conditions; in fact, the materials of which the tools are made can have irregular or reflecting surfaces that affect the laser signal reading, reducing measurement precision.

Further drawbacks of the conventional monitoring methods described above are represented by the possibility of false positives and false negatives being generated as the changes in the conditions of the excavated material can generate incorrect signals, leading to unnecessary maintenance operations or failure to detect damaged tools.

Further drawbacks are represented by an increase in operating costs due to the fact that the impossibility of accurately predicting wear leads to excessive preventive maintenance or, on the contrary, to more extensive damage caused by delayed action.

Further drawbacks are represented by the impact on productivity linked to the need for machine downtime for inspections and replacements, which causes a reduction in operating efficiency, affecting continuity of the work and project implementation times.

A further drawback is represented by excessive vibrations caused by tools that are no longer performing optimally and which can lead to the premature breakage of other machine parts.

Examples of systems belonging to the state of the art that, however, suffer from the drawbacks indicated above, are described below.

EP3802968 describes a system for monitoring the condition of wear of digging tools by means of image capture devices and processing units configured to analyse images of the tools during operation of the machine.

US12252870 describes a system for detecting wear of digging tools that uses optical sensors and advanced image processing techniques, optionally combined with machine learning algorithms, to determine the level of wear of the tools.

US11821177 describes systems for monitoring components of construction machines based on the use of video cameras and image analysis algorithms to detect conditions of wear or damage of the components.

US2022/383469 describes remote monitoring systems based on image capture and on processing of the acquired data.

The object of the present invention is to overcome the drawbacks indicated above.

More in particular, the object of the present invention is to provide a continuous and precise monitoring system for excavation equipment of earth-moving machines with a view to improving the performance of the machines.

A further object of the present invention is to provide a monitoring method reducing management and maintenance costs.

A further object of the present invention is to provide a monitoring system designed to eliminate machine downtimes caused by the time necessary for visual inspection by an operator in charge of this task.

Yet another object of the present invention is to provide a monitoring system designed to ensure real time notification of any defects linked to the excavation equipment.

A further object of the present invention is to provide a monitoring system designed to ensure a reduction in the costs related to repairs to the excavation equipment.

Another object of the present invention is to provide a monitoring system designed to allow the collection of data relating to the tools, such as wear speed, number of replacements carried out for each position and the like, in order to control operating costs, improve design and detect any manufacturing defects.

Yet another object of the present invention is to provide users with a monitoring system for excavation equipment of earth-moving machinery designed to ensure a high level of resistance and reliability over time and moreover which can be inexpensively and easily produced.

These and other objects are achieved by the device of the invention having the features set forth in claim 1.

According to the invention, there is provided a monitoring system for construction machines comprising a detection device attached to the excavation equipment of a construction machine by means of a specific structure, an acquisition and processing unit configured to acquire and process data detected in real time by the detection device by means of analysis algorithms based on artificial intelligence and a user interface for displaying the results of the analysis in real time.

Advantageous embodiments of the invention are set forth in the dependent claims.

The construction and functional features of the monitoring system for excavation equipment of the present invention may be better understood from the detailed description below in which reference will be made to the accompanying drawings, which illustrate an embodiment thereof provided purely by way of non-limiting example, and wherein:
Fig. 1 schematically illustrates the monitoring system for excavation equipment of the present invention attached to an earth-moving machine;
Fig. 2 schematically illustrates an enlarged view of the detail "C" of Fig. 1;
Fig. 3 illustrates a functional diagram of the monitoring system of the invention;
Figs. 4 to 6 illustrate photographic images representative of the condition of the excavation equipment of the earth-moving machinery in accordance with three different possible conditions of damage.

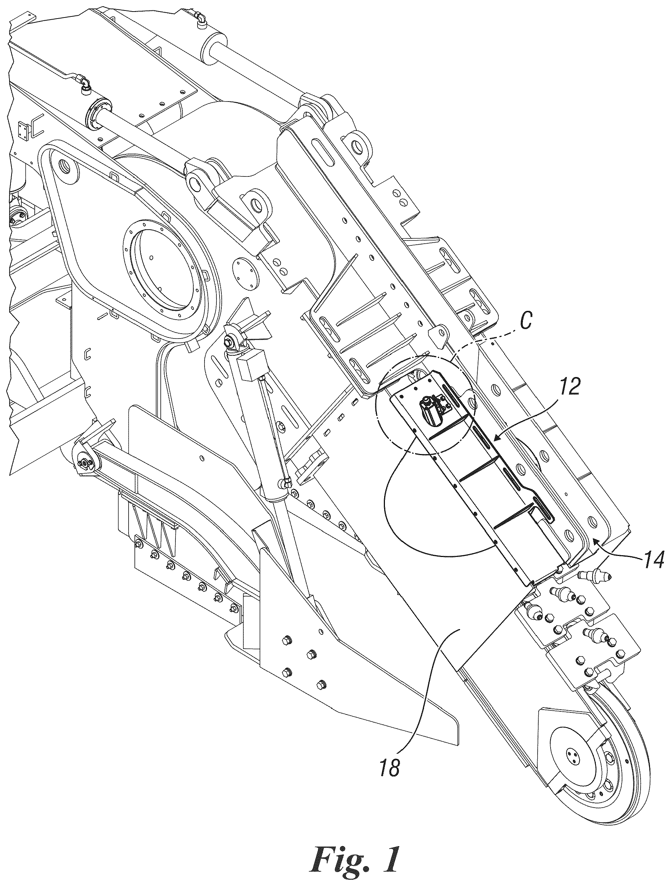

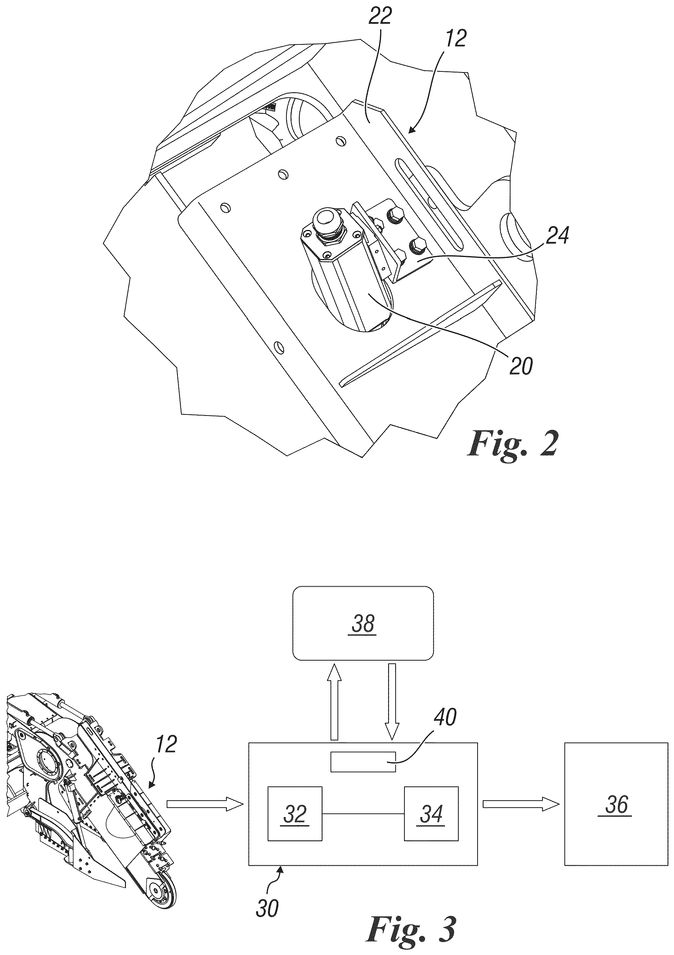

With reference to Fig. 1 and to the enlarged detail of Fig. 2, there is illustrated the monitoring system for excavation equipment of the invention comprising a detection device 12 attached to the excavation equipment 18 by means of a specific structure.

The detection device 12 comprises at least one visual acquisition device 20 coupled to the excavation equipment 18 by means of a specific structure comprising a plate-like element 22 and an angular support 24 configured to maintain a predetermined orientation of the visual acquisition device.

The optics of the at least one visual acquisition device 20 face the excavation equipment 18 through a specific opening in the plate-like element 22.

Lighting devices are coupled with the at least one visual acquisition device 20, at the opening in the plate-like element 22; as better explained below, these lighting devices have the function of ensuring correct illumination of the excavation equipment and allowing very short exposure times of the frames.

In the case of several visual acquisition devices, they can be connected to each other in parallel and are arranged, preferably, equally spaced from one another and in accordance with the features of the cutting equipment and with the aim of increasing the detection field (for example, in the case of a surface miner machine, they are arranged along the axis of the cutting drum).

The visual acquisition device has the function of capturing images of the excavation equipment 18 with a high frame rate.

Moreover, the visual acquisition device comprises a lens cleaning system by means of a jet of compressed air.

The monitoring system for excavation equipment of the invention further comprises an acquisition and processing unit or calculator 30 (provided with a graphics card) in a remote position with respect to the detection device 12 attached to an excavation structure 14 with the function of collecting the images detected by the at least one visual acquisition device 20 and of processing them by means of specific image recognition algorithms 32 (based on artificial intelligence neural networks that can be defined as deep learning models for a determination of the type of defect detected and of its position; these algorithms process hundreds of images per minute.

The processing results are stored in a storage unit 34 of the acquisition and processing unit.

A graphic interface 36 (mounted on the excavation machine) shows the operator the results of the analysis of the acquisition and processing unit in real time and alerts them in the case of any defects being found; by means of the graphic interface, a graphic indication of the condition of the digging tool and of its elements is shown and an indication of the position of the worn, lost or damaged elements is provided for prompt maintenance.

Moreover, the monitoring system for excavation equipment of the invention is remotely connected with a central remote unit 38 for collection and storage of the data detected and processed and for generating reports, email notifications, etc., with a view to creating a historical record for planning any maintenance operations and the like.

Further, an optional modem device 40 (preferably of 4G type) allows the monitoring system to access a central remote server to update the processing and calculation models or to collect evidence, such as photographs of defects.

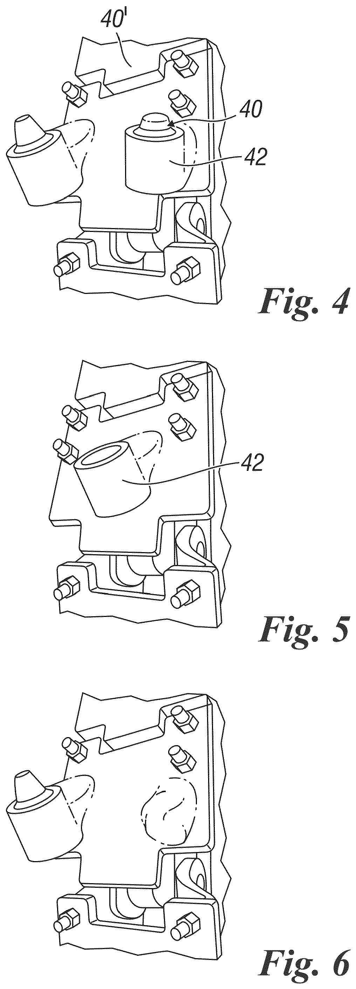

With reference to Figs. 4 to 6, examples of defects that can be detected by the monitoring system of the invention are depicted.

Fig. 4 illustrates the case of a cutting tool 40 with a worn tip 40'.

Fig. 5 illustrates the case of loss of the tool with respect to the tool pocket.

Fig. 6 illustrates the case of loss of a tool pocket 42.

As can be understood from the above, the advantages achieved by the monitoring system for excavation equipment of the present invention are evident.

The monitoring system for excavation equipment of the present invention allows real time control and verification of the condition of the digging tools of an excavation machine, with the resulting advantage of eliminating downtime resulting from visual inspection time by skilled technical personnel.

A further advantage of the monitoring system of the invention is represented by the fact that it allows prompt notification of defects that may affect the digging tool.

A further advantage is represented by the fact that the monitoring system of the invention allows a reduction of the costs related to repairing the excavation equipment.

A further advantage of the monitoring system of the invention is represented by the fact that it enables the collection of objective data related to the frequency of replacement and wear of the tools and to their position.

One more advantage of the monitoring system of the invention is represented by the fact that the amount of data collected enables forecasting and planning of replacement of the tools, while at the same time allowing improvements to the design of these tools to improve their useful life.

Although the invention has been described above with particular reference to an embodiment thereof provided purely by way of non-limiting example, many modifications and variations will be apparent to the person skilled in the art in the light of the above description. Therefore, the present invention includes all modifications and variations that fall within the scope of the appended claims.

## Claims

1. A monitoring system for excavation equipment of earth-moving machinery, comprising a detection device (12) attached to the excavation equipment (18) by means of a specific structure, an acquisition and processing unit (30) configured to acquire and process data detected in real time by the detection device (12) by means of analysis algorithms based on artificial intelligence, and a user interface (36) for displaying the results of the analysis in real time, **characterised in that** the detection device (12) comprises at least one visual acquisition device (20) coupled to the excavation equipment (18) by means of a specific structure comprising a plate-like element (22) and an angular support (24), the visual acquisition device (20) being arranged with the optics facing the excavation equipment (18) through an opening in the plate-like element (22) to acquire images of the excavation equipment during operation of the machine, the acquisition and processing unit (30) having the function of collecting the images detected by the at least one visual acquisition device (20) to determine the conditions of wear and/or damage of the excavation equipment (18)

2. The monitoring system according to claim 1, **characterised in that** lighting devices oriented in the direction of the excavation equipment (18) are coupled with the least one visual acquisition device (20).

3. The monitoring system according to claim 1 or 2, **characterised in that** the at least one visual acquisition device (20) comprises a lens cleaning system by means of a jet of compressed air.

4. The monitoring system according to the preceding claims, **characterised in that** several visual acquisition devices (20) can be connected to one another in parallel.

5. The monitoring system according to claim 1, **characterised in that** the acquisition and processing unit (30) comprises a storage unit (34) for storage of the processing results.

6. The monitoring system according to claim 1, **characterised in that** the image recognition algorithms (32) are based on artificial intelligence neural networks defined by deep learning models that analyse and classify images through convolutional neural networks to determine the type of defect detected and its position by processing hundreds of images per minute.

7. The monitoring system according to the preceding claims, **characterised by** comprising a 4G modem device (40) for accessing a central remote server to update the processing and calculation models or to collect photographic evidence of the defects.
